Europäisches Patentamt

European Patent Office

Office européen des brevets

(11) Veröffentlichungsnummer: **0 331 670**
**A1**

## (12) EUROPÄISCHE PATENTANMELDUNG

(21) Anmeldenummer: **89890058.4**

(22) Anmeldetag: **27.02.89**

(51) Int. Cl.⁴: **G 01 P 3/66**

(30) Priorität: **04.03.88 AT 575/88**

(43) Veröffentlichungstag der Anmeldung:
**06.09.89 Patentblatt 89/36**

(84) Benannte Vertragsstaaten:
**CH DE FR GB IT LI SE**

(71) Anmelder: **AVL Gesellschaft für
Verbrennungskraftmaschinen und Messtechnik
mbH.Prof.Dr.Dr.h.c. Hans List
Kleiststrasse 48
A-8020 Graz (AT)**

(72) Erfinder: **Muhrer, Gerhard
St.Peter Hauptstrasse 33a
A-8042 Graz (AT)**

**Pannold, Reinhard
Körblergasse 26b
A-8010 Graz (AT)**

**Boschanig, Reinhard
Ulmgasse 57/6
A-8053 Graz (AT)**

(74) Vertreter: **Pinter, Rudolf
Patentanwalt Dipl.-Ing. Rudolf Pinter Elisabethstrasse
1/24
A-1010 Wien (AT)**

(54) **Verfahren und Einrichtung zur Bestimmung innenballistischer Kenngrössen in Rohrwaffen.**

(57) Zur zerstörungsfreien Bestimmung innenballistischer Kenngrößen in Rohrwaffen wird eine elektromagnetische Welle über einen seitlich am Waffenrohr (1) vorgesehenen Hohlleiter-Übergang (7,7',7") eingekoppelt und nach Reflexion an dem im Waffenrohr (1) befindlichen Geschoß (6) wieder ausgekoppelt. Durch Anordnung von zumindest zwei in Längsrichtung des Waffenrohres (1) in einem von der verwendeten Wellenlänge bestimmten Abstand liegenden Koppelöffnungen (40,40',41) wird erreicht, daß die eingekoppelte Welle praktisch zu 100 % in Richtung zum Geschoß (6) läuft, und daß auch die Auskoppelung der reflektierten Welle effektiver wird. Damit ist das aus der bei einer Änderung der Geschoßposition im Waffenrohr (1) geänderten Phasenlage zwischen eingekoppelter und ausgekoppelter Welle gewonnene Meßsignal für die jeweilige Geschoßposition gegenüber Störsignalen sehr groß, sodaß auch beim scharfen Schuß signifikante Messungen möglich sind.

*Fig. 2*

EP 0 331 670 A1

## Beschreibung

### Verfahren und Einrichtung zur Bestimmung innenballistischer Kenngrößen in Rohrwaffen

Die Erfindung betrifft ein Verfahren zur zerstörungsfreien Bestimmung innenballistischer Kenngrößen in Rohrwaffen, wobei eine elektromagnetische Welle über einen seitlich am Rohr angeordneten Hohlleiter-Übergang in das Waffenrohr eingekoppelt und nach Reflexion an einem in diesem befindlichen Geschoß wieder ausgekoppelt wird und wobei die sich bei einer Änderung der Geschoßposition im Waffenrohr ändernde Phasenlage zwischen eingekoppelter und ausgekoppelter Welle als Meßsignal verwendet wird. Weiters betrifft die Erfindung auch eine Einrichtung zur Durchführung eines derartigen Verfahrens an einem Waffenrohr mit einem darin befindlichen Geschoß, mit einer Einheit zur Erzeugung der einzukoppelnden Welle, einer damit in Verbindung stehenden und einen seitlich in der inneren Oberfläche eines vom Geschoß überstrichenen Bereiches am Waffenrohr angeordneten Hohlleiter-Übergang aufweisenden Koppeleinrichtung zum Ein- und Auskoppeln der Wellen und einer ebenfalls mit der Koppeleinrichtung in Verbindung stehenden Auswerteeinheit.

Derartige Verfahren bzw. Einrichtungen sind bekannt (siehe beispielsweise US-PS 4 283 989) und dienen im wesentlichen zur Bestimmung der Geschwindigkeits- bzw. Beschleunigungsverhältnisse an einem noch im Waffenrohr befindlichen Geschoß, welche Aussagen über die innenballistischen Verhältnisse erlauben und entweder bei der Weiterentwicklung der Waffe bzw. der Munition Verwendung finden oder aber auch beispielsweise zur Korrektur eines Zeitzünders im Geschoß zur Berücksichtigung der tatsächlichen Mündungsgeschwindigkeit benutzt werden können. Es wird dabei üblicherweise im Mikrowellenbereich (Wellenlängen im Millimeter- bzw. Zentimeter-Bereich) gearbeitet, wobei die jeweils verwendete Wellenlänge unter anderem vom Rohrkaliber abhängt. Das Waffenrohr wird dabei als Hohlleiter für die über den seitlichen Übergang eingekoppelten Mikrowellen verwendet, in dem sich, im wesentlichen abhängig von Frequenz und Rohrkaliber, unterschiedliche Moden bzw. Wellentypen ausbilden. Um eine Eindeutigkeit der Meßergebnisse zu gewährleisten, werden die Frequenz der Mikrowellen und die Art der Einkoppelung üblicherweise so gewählt, daß sich ausschließlich ein bestimmter Wellentyp ausbilden kann. Das im Waffenrohr befindliche Geschoß wirkt als Kurzschlußschieber, an dem die eingekoppelte Welle reflektiert wird, wobei durch Überlagerung der eingekoppelten mit der reflektierten Welle eine stehende Welle im als Hohlleiter dienenden Waffenrohr entsteht. Beim Abfeuern des Geschosses wird diese stehende Welle vom Geschoß gewissermaßen vor sich hergeschoben bzw. die Phasenlage zwischen der eingekoppelten und der reflektierten Welle geändert. Diese durch die Bewegung des Geschosses hervorgerufene und davon unmittelbar beeinflußte Phasenverschiebung kann durch eine geeignete Meßanordnung in Form der sogenannten Dopplerfrequenz detektiert und ausgewertet werden. Der Geräteaufwand bzw. die Mikrowellen-Hardware entspricht im wesentlichen einem Kleinleistungs-Dopplerradar, wobei allerdings verschiedene spezielle Anforderungen insbesonders im Hinblick auf die Einkoppelung und Auskoppelung am Waffenrohr bestehen.

Abgesehen von den ursprünglich für die Einkoppelung bzw. Auskoppelung der elektromagnetischen Welle verwendeten und durch das aus dem Waffenrohr austretende Geschoß stets zumindest teilweise zerstörten Antennen, Umlenkspiegeln oder dergleichen, sind seit einiger Zeit Verfahren bzw. Einrichtungen der eingangs genannten Art zur zerstörungsfreien Ein- bzw. Auskoppelung bekannt. Trotz dieses Umstandes gibt es bis heute kein in der Praxis auch brauchbares derartiges System auf dem Markt, was im wesentlichen darauf zurückzuführen ist, daß die beim Abfeuern des Geschosses auftretenden mechanischen Belastungen des Waffenrohres enorm störende Einflüsse auf die Auswertung ausüben und zwar insbesonders deshalb, da die für die Auswertung zur Verfügung stehenden Nutzsignalhöhen nur relativ gering sind.

Obwohl bei den bisher bekannten Ausführungen mit zerstörungsfreier Einkoppelung bei simulierten Schüssen (bei denen das Geschoß mit Druckluft durchs Waffenrohr geblasen wird) gut auswertbare Signale und damit brauchbare Meßergebnisse erzielt werden, bricht beim scharfen Schuß das Nutzsignal bei allen bekannten Ausführungen meist zusammen bzw. ist zumeist von Störungen überlagert, welche in der gleichen Größenordnung wie das Nutzsignal liegen.

Aufgabe der vorliegenden Erfindung ist es, ein Verfahren bzw. eine Einrichtung der eingangs genannten Art so zu verbessern, daß die genannten Nachteile der bekannten Verfahren bzw. Einrichtungen vermieden werden und daß insbesonders auch und gerade beim scharfen Schuß sinnvolle und signifikante Messungen zufolge ausreichend großer verwertbarer Nutzsignale möglich sind.

Die Erfindung geht von der Überlegung aus, daß bei den in den bisher bekannten Verfahren bzw. Einrichtungen der genannten Art verwendeten Koppelelementen zumindest die Hälfte der Energie der elektromagnetischen Welle anstelle in Richtung zum Geschoß eingekoppelt zu werden aus der Mündung des Waffenrohres abgestrahlt wird. Die für die Koppelung selbst vorgesehenen Elemente weisen zumeist nur ein sehr schlechtes Stehwellenverhältnis auf, was bedeutet, daß nur ein relativ kleiner Teil der erzeugten Energie tatsächlich ins Waffenrohr und zur Reflexion an der Geschoßspitze gelangt. Bei mechanischen Belastungen, wie sie üblicherweise beim scharfen Schuß nicht zu vermeiden sind, ändert sich dann das Stehwellenverhältnis weiter und es kommt zur Ausbildung von Störsignalen, welche leicht die Größe des Nutzsignales erreichen oder übertreffen können.

Ausgehend von dieser Überlegung löst die vorliegende Erfindung die oben genannte Aufgabe bei einem Verfahren der eingangs genannten Art dadurch, daß zur Einkoppelung der elektromagnetischen Welle diese aufgeteilt und an zumindest zwei beabstandeten Stellen des Hohlleiter-Überganges dem Waffenrohr zugeführt wird, sodaß sich die in Richtung zum Geschoß ausbreitenden Wellenteile addieren und die in die entgegengesetzte Richtung ausbreitenden Wellenteile kompensieren. Durch dieses sowohl konstruktiv als auch verfahrenstechnisch sehr einfache Prinzip ist erreicht, daß die ins Waffenrohr eingekoppelten Wellenteile zufolge der Abstände der tatsächlichen Übergangsöffnungen zueinander solche relative Phasenlagen haben, die eine eindeutige Ausbreitung der eingekoppelten Welle in eine bestimmte Richtung - nämlich in Richtung zum Geschoß - erzwingen. Damit können nahezu 100 % der erzeugten Mikrowellenenergie auch tatsächlich ins Waffenrohr eingebracht werden, sodaß etwaige Störungen der genannten Art auch beim scharfen Schuß gegenüber dem auszuwertenden Nutzsignal vernachlässigbar bleiben.

Bei der Einrichtung der eingangs genannten Art wird die vorliegende Erfindung dadurch realisiert, daß die Koppeleinrichtung zumindest zwei Koppelöffnungen aufweist, die an beabstandeten Stellen der inneren Oberfläche eines vom Geschoß überstrichenen Bereiches am Waffenrohr so angeordnet sind, daß sich die in Richtung zum Geschoß ausbreitenden Wellenteile addieren und die in die entgegengesetzte Richtung ausbreitenden Wellenteile kompensieren. Gemäß einer bevorzugten Ausgestaltung der erfindungsgemäßen Einrichtung ist in diesem Zusammenhang vorgesehen, daß bei gleicher Ausbreitungsgeschwindigkeit der einzelnen Wellenteile und gleicher Phasenverschiebung an den einzelnen Koppelöffnungen der in Längsrichtung des Waffenrohres gemessene Abstand L der einzelnen Koppelöffnungen ein natürlichzahliges Vielfaches der verwendeten Wellenlänge vermehrt um ein Viertel der Wellenlänge ($L = n \cdot \lambda + \lambda/4$; mit $n$ = natürliche Zahl, und $\lambda$ = Wellenlänge) beträgt. Damit ist sichergestellt, daß sich durch die Phasenverschiebung der übertretenden Wellenteile die ins Rohr eingekoppelte Welle in die unerwünschte Richtung überhaupt nicht ausbreiten kann und daß in die erwünschte Richtung zum Geschoß die entsprechende Addition der von den einzelnen Koppelöffnungen herrührenden Wellenteile erfolgt.

Nach einer besonders bevorzugten weiteren Ausgestaltung des erfindungsgemäßen Verfahrens kann zur statischen Kalibrierung eine mit der Wegmeßeinrichtung zusammenwirkende Geschoßatrappe zumindest bereichsweise durch das Waffenrohr bewegt und der Zusammenhang von aktuellem Ort der Geschoßatrappe und Phasendifferenz bzw. Dopplerfrequenz bestimmt werden. Diese sehr einfache Möglichkeit der Kalibrierung erlaubt eine eindeutige und äußerst genaue (je nach Rohrkaliber im Bereich zwischen etwa 0,1 und einigen Millimetern) Zuordnung der Meßsignale zum tatsächlichen Geschoßweg bzw. -ort, auch wenn sich verschiedene Parameter, wie etwa die Steigung der Züge, über die Länge des Waffenrohres ändern.

Prinzipiell kann die Koppeleinrichtung mit den einzelnen Öffnungen des Hohlleiter-Überganges an beliebiger Stelle natürlich auch in der Wand des Waffenrohres selbst vorgesehen werden, wozu im wesentlichen lediglich die entsprechenden Öffnungen am Waffenrohr angebracht werden müssen. Als besonders vorteilhaft hat sich aber erwiesen, die Koppeleinrichtung wie auch bei der eingangs genannten US-PS 4.283.989 in einem separat an der Mündung des Waffenrohres aufsetzbaren und mit dieser verbindbaren Koppelelement vorzusehen. Damit ist einerseits die für das erfindungsgemäße Verfahren notwendige Adaptierung des Waffenrohres auf die Vorsehung von Maßnahmen zur Ermöglichung einer sicheren Befestigung des Koppelelements an der Mündung - beispielsweise über Schraub- oder Klauenverbindungen - reduziert; andererseits ermöglicht die Vorsehung der Koppelöffnungen an der Mündung des Waffenrohres die entsprechenden Messungen über die gesamte Länge des Waffenrohres, was bei weiter hinten am Waffenrohr liegender Koppeleinrichtung wegen der hinter dem vorbeigehenden Geschoß zufolge chemischer Reaktionen des Luftsauerstoffs mit den heißen Pulvergasen unter Umständen auftretenden hohen Konzentrationen an freien Elektronen und der damit einhergehenden Beeinflussung der elektromagnetischen Wellen zumindest problematisch ist. Das Koppelelement hat dabei vorzugsweise in dem vom Geschoß überstrichenen inneren Bereich eine die Koppelöffnungen aufweisende zylindrische Durchgangsausnehmung mit einem gegenüber dem Waffenrohr vergrößerten Durchmesser, wobei zwischen der Durchgangsausnehmung des Koppelements und dem Waffenrohr auch ein einen konischen Übergang zwischen den unterschiedlichen Durchmessern aufweisender, vorzugsweise austauschbarer Adapterteil angeordnet sein kann. Durch die zylindrische Ausbildung des für den Durchtritt des Geschosses freien inneren Bereichs des Koppelements ist eine sehr einfache Möglichkeit für die Einkoppelung der elektromagnetischen Welle gegeben, welche sich im anschließenden ebenfalls zylindrischen Waffenrohr damit sehr verlustarm ausbreiten kann. Die Vergrößerung im Durchmesser gegenüber dem Rohrkaliber dient zur Ermöglichung eines einwandfreien Durchganges des Geschosses, wobei mittels des konischen Adapterteiles eine möglichst verlustfreie Einkoppelung in das Waffenrohr selbst unter Hintanhaltung der Ausbildung unerwünschter Wellentypen oder Reflexionen sichergestellt wird. Soferne dieser Adapterteil austauschbar ist, kann in gewissen Grenzen auch eine Anpassung eines Koppelements an verschiedene Rohrkaliber erfolgen.

Abgesehen von der genannten zylindrischen Ausbildung des den eigentlichen Hohlleiter-Übergang aufweisenden, inneren Bereiches des Koppelelementes könnte dieser natürlich auch andere geeignete Querschnittsform haben, z.B. ellyptische oder auch quadratische.

Der Adapterteil kann nach einer weiteren vorteilhaften Ausgestaltung der Erfindung im Bereich des konischen Übergangs nach außen offene Ausnehmungen zum Druckabbau aufweisen, womit eventuelle negative Auswirkungen des Druckes der Pulvergase hinter dem Geschoß auf den Hohlleiter-Übergang hintangehalten werden.

Die Koppelöffnungen können in weiterer Ausbildung der Erfindung im wesentlichen rechteckig sein und mit einem entsprechenden Rechteckhohlleiter in Verbindung stehen, der seinerseits, vorzugsweise mittels Koaxialkabel, mit der Einheit zur Erzeugung der einzukoppelnden Welle sowie mit der Auswerteeinheit verbunden ist. Damit sind einfache und relativ leicht beherrschbare Verhältnisse für die Ein- bzw. Auskoppelung der elektromagnetischen Wellen geschaffen, wobei natürlich die Koppelöffnungen auch beispielsweise aus Fertigungsgründen von der reinen Rechteckform abweichende, langlochartige Ausbildung haben können, was die Herstellung etwa mittels eines Fingerfräsers erlaubt.

Die Koppelöffnungen können mittels elektrisch nichtleitender Verschlußstücke mit geringen dielektrischen Verlusten gegen den vom Geschoß überstrichenen Bereich hin abgeschlossen sein, was das Eindringen was Verschmutzungen, sowie auch schädliche Auswirkungen der Drücke bzw. heißen Pulvergase, in den Hohlleiter-Übergang verhindert.

Die Erfindung wird im folgenden noch anhand der in der Zeichnung teilweise schematisch dargestellten Ausführungsbeispiele näher beschrieben.

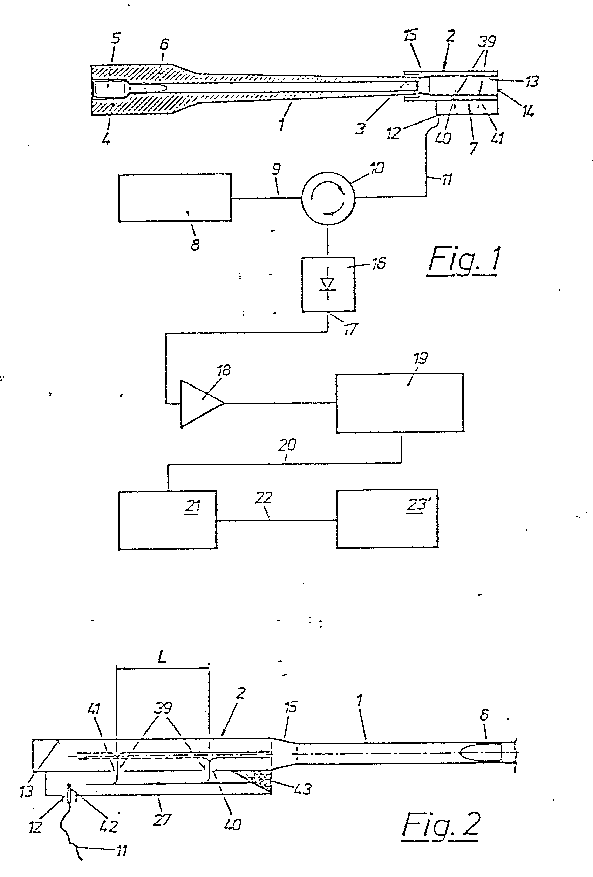

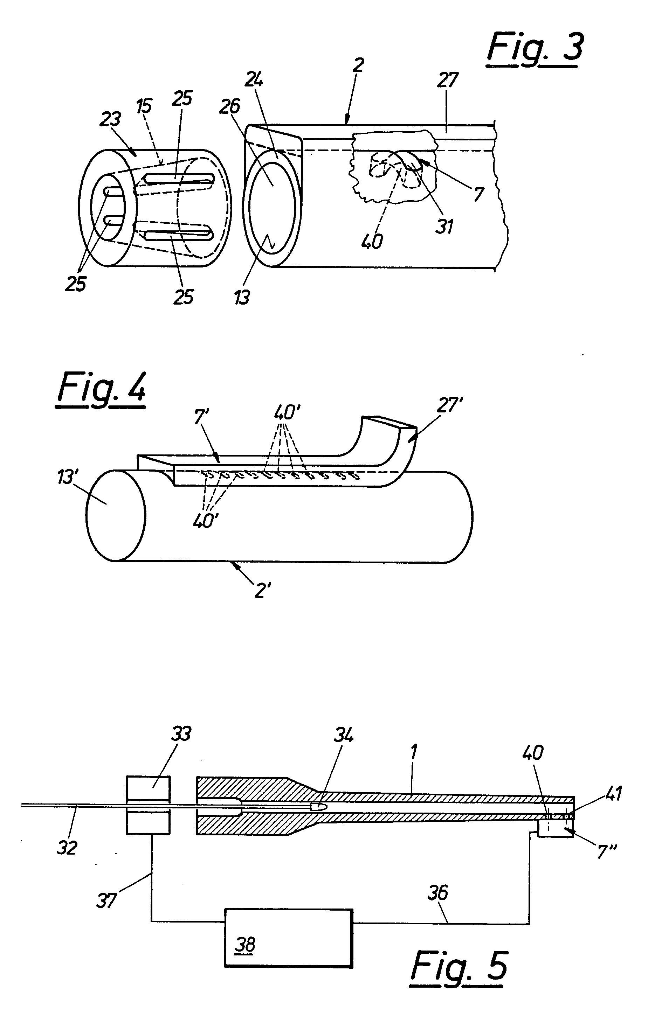

Fig. 1 zeigt in teilweise schematischer Darstellung eine Einrichtung zur Durchführung des erfindungsgemäßen Verfahrens, Fig. 2 zeigt das Detail eines Koppelelements einer anderen Einrichtung nach der Erfindung, Fig. 3 zeigt das Detail eines anderen Koppelelements einer erfindungsgemäßen Einrichtung mit austauschbarem Adapterteil, Fig. 4 zeigt eine andere Ausführungsform eines Koppelelements einer erfindungsgemäßen Einrichtung und Fig. 5 zeigt eine schematische Anordnung nach der Erfindung zur Durchführung einer statischen Kalibrierung.

Die Einrichtung nach Fig. 1 dient zur Bestimmung innenballistischer Kenngrößen in einem Waffenrohr 1, welches beispielsweise auch in einer hier nicht weiter dargestellten Rohrwaffe eingebaut sein kann und bis auf das Koppelelement 2 an der Mündung 3 keinerlei Änderung gegenüber der serienmäßigen Ausführung aufweist. In der Geschoßkammer 4 an dem der Mündung 3 gegenüberliegenden Ende des Waffenrohres 1 ist eine Patrone 5 mit einem Geschoß 6 eingesetzt, dessen Bewegung durch das Waffenrohr 1 im Hinblick auf den Weg/Zeit-Zusammenhang bzw. die jeweilige Geschwindigkeit und Beschleunigung untersucht werden soll.

Zu diesem Zweck wird über zumindest einen, im Bereich des Koppelelementes 2 angeordneten Hohlleiter-Übergang 7 eine elektromagnetische Welle in das Waffenrohr 1 eingekoppelt und nach Reflexion am Geschoß 6 wieder ausgekoppelt, wonach die sich bei einer nderung der Geschoßposition im Waffenrohr ändernde Phasenlage zwischen eingekoppelter und ausgekoppelter Welle als Meßsignal für die Geschoßposition und nach entsprechender Verknüpfung mit der aktuellen Zeit zur Bestimmung von Geschwindigkeit und Beschleunigung verwendet werden kann.

Die in einem Mikrowellengenerator 8 erzeugte elektromagnetische Welle, welche je nach dem Kaliber des Waffenrohres 1 üblicherweise Wellenlängen in Millimeter- bzw. Zentimeterbereich aufweist, wird über ein Koaxialkabel 9 einem Zirkulator 10 zugeführt, von wo sie entsprechend der Funktion desselben über ein weiters Koaxialkabel 11 an einen Koaxial-Hohlleiter-Übergang 12 gelangt. Dort wird beispielsweise eine H-Typ-Welle angeregt, die über den Hohlleiter-Übergang 7 (mit dieser Bezeichnung ist hier und im folgenden immer ein Hohlleiter-Hohlleiter-Übergang zu verstehen) in den einen Rundhohlleiter darstellenden inneren Bereich 13 des Koppelelements 2 gelangt und dabei beispielsweise in die zylindersymmetrische $E_{01}$-Welle umgewandelt wird. Zufolge der anhand der Fig. 2 nachfolgend noch näher erläuterten Einkoppelung der elektromagnetischen Welle an zumindest zwei beabstandeten Stellen 39 bzw. konkret an den beiden Koppelöffnungen 40, 41 gelangt praktisch die gesamte eingekoppelte elektromagnetische Welle über einen konischen Übergang 15 ins Innere des wiederum einen Rundhohlleiter darstellenden Waffenrohres 1. Dieser konische Übergang 15 ist hier deshalb vorgesehen, um den inneren Bereich 13 mit gegenüber dem Kaliber des Waffenrohres 1 zumindest geringfügig größerem Durchmesser ausführen zu können, ohne an der Übergangsstelle zum Waffenrohr 1 Reflexionen bzw. das Auftreten zusätzlicher, unerwünschter Wellentypen riskieren zu müssen.

Die von der Spitze des Geschosses 6 reflektierte Welle wird über den Hohlleiter-Übergang 7 wieder ausgekoppelt und gelangt über den Koaxial- Hohlleiter-Übergang 12 und das Koaxialkabel 11 wiederum zum Zirkulator 10, wo sie, bedingt durch das nicht reziproke Verhalten dieses Bauelements von der vom Mikrowellengenerator 8 kommenden Welle abgekoppelt und einem Mischer 16 zugeführt wird. Durch Reflexionen und zufolge einer endlichen Sperrdämpfung des Zirkulators 10 liegt an diesem Mischer 16 auch ein Bruchteil der vom Mikrowellengenerator 8 kommenden Welle an und es kommt daher zu einer Mischung zwischen der ausgesandten und der reflektierten Welle. Am Ausgang 17 des Mischers 16 kann die Phasendifferenz zwischen diesen beiden Wellen bzw. die Dopplerfrequenz abgegriffen werden, die nach entsprechender Verstärkung in einem Verstärker 18 und hier nicht weiter dargestellter A/D-Wandlung für den ganzen zeitlichen Bereich eines Schusses in einem Transientenspeicher 19 abgelegt wird. Über eine Verbindungsleitung 20 ist ein Rechner 21, beispielsweise ein handelsüblicher PC, mit dem Transientenspeicher 19 in Verbindung, der die weitere Verarbeitung besorgt und über eine Leitung 22 mit einer Ausgabeeinheit 23', beispielsweise einem Plotter, zur Anzeige der Ergebnisse verbunden ist. Zufolge der dargestellten und beschriebenen Art der Ein- bzw. Auskoppelung der elektromagnetischen Welle seitlich am Waffenrohr ist eine völlig zerstörungsfreie Bestimmung der innenballistischen Kenngrößen möglich, bei der das Geschoß 6 das Waffenrohr völlig ungehindert frei verlassen kann, womit jegliche Notwendigkeit zum Ersatz bzw. zur Neujustierung von Teilen der Einrichtung nach jedem Schuß entfällt.

Aus der bezüglich des Koppelelementes 2 etwas mehr ins Detail gehenden Fig. 2 ist ersichtlich, daß am Koaxial-Hohlleiter-Übergang 12 ein Antennenstift 42 in das Innere des beispielsweise mit rechteckigem Querschnitt ausgebildeten Hohlleiters 27 ragt, was unter Beachtung der in diesem Zusammenhang dem Fachmann geläufigen Maßnahmen auf einfache Weise die Erzeugung einer elektromagnetischen Welle im Inneren des Hohlleiters 27 ermöglicht. Zufolge eines in der Darstellung links vom Übergang 12 angedeuteten reflektierenden Abschlusses gelangen praktisch 100 % dieser Welle im Hohlleiter 27 nach rechts, werden defakto aufgeteilt und treten über zwei an in Ausbreitungsrichtung der Welle beabstandeten Stellen 39 angeordneten Koppelöffnungen 40, 41 in den inneren Bereich 13 des Koppelelements 2 ein. Die übergekoppelte Spannung wird dabei durch ein elektrisches und/oder ein magnetisches Feld in der Koppelöffnung induziert und ist daher um 90° phasenverschoben. Bei Wahl des richtigen Abstandes L der beiden Koppelöffnungen 40, 41 addieren sich die nach rechts ausbreitenden Wellenanteile, während sich die nach links laufenden Anteile kompensieren. Bei gleicher Ausbreitungsgeschwindigkeit der einzelnen Wellenteile und gleicher Phasenverschiebung an den einzelnen Koppelöffnungen ist diese Kompensation vollständig, wenn der in Längsrichtung des Waffenrohres gemessene Abstand L der einzelnen Koppelöffnungen 40, 41 der Gleichung $L = n \cdot \lambda + \lambda/4$ gehorcht; mit n = natürliche Zahl (0, 1, 2,...), und $\lambda$ = Wellenlänge.

Durch einen in der Darstellung der Fig. 2 am rechten Ende des Hohlleiters 27 angedeuteten reflexionsfreien Abschluß 43 ist sichergestellt, daß rücklaufende Wellenteile im Hohlleiter 27 ausgeschlossen sind, welche die Einkoppelung bzw. die beschriebene Art der Addition und Kompensation stören würden.

Die beschriebene Art der Einkoppelung der elektromagnetischen Welle in das Koppelelement 2 bzw. über den konischen Übergang 15 in das Waffenrohr 1 sichert eine große Intensität der in Richtung zum Geschoß 6 laufenden Welle, was in unmittelbarer Folge auch das an der Geschoßspitze reflektierte Signal sehr intensiv sein läßt. Das reflektierte Signal wird unter Umkehrung des beschriebenen Prinzips der Einkoppelung wieder ausgekoppelt, wobei sich nun die Vorteile der in beschriebener Weise aufgeteilten Auskoppelung dahingehend auswirken, daß die ausgekoppelte Welle im Hohlleiter 27 praktisch vollständig nach links läuft, da sich die in Richtung zum reflexionsfreien Abschluß 43 laufenden Anteile wiederum kompensieren.

Das in Fig. 3 dargestellte Koppelelement 2 ist im wesentlichen ähnlich aufgebaut wie die in Fig. 1 bzw. 2 nur schematisch dargestellten, wobei hier jedoch nun der konische Übergang 15 in einem austauschbaren Adapterteil 23 angeordnet ist, der in der Darstellung separat von den übrigen Teilen des Koppelelements gezeichnet ist und auf hier nicht weiter interessante Weise - beispielsweise durch Verschraubung oder mittels Klauenkupplungen - einerseits an der Stirnfläche 24 und andererseits am nicht weiter dargestellten Waffenrohr befestigbar ist. Im Bereich des konischen Überganges 15 des Adapterteils 23 sind nach außen offene schlitzförmige Ausnehmungen 25 über den Umfang verteilt, die einen Druckabbau ermöglichen und natürlich so ausgeführt sein müssen, daß die einlaufende bzw. die reflektierte Welle möglichst wenig gestört wird.

In dem vom Geschoß beim Abfeuern des Schusses überstrichenen inneren Bereich 13 ist eine, wie beschrieben einen gegenüber dem Rohrkaliber vergrößerten Durchmesser aufweisende, zylindrische Durchgangsausnehmung 26 angeordnet, in welche seitlich die Koppelöffnungen (hier ist nur eine dargestellt und mit 40 bezeichnet) münden. Senkrecht zur Achse des Koppelelements 2 gesehen ist diese Koppelöffnung 40 im wesentlichen rechteckig, wobei hier die schmalen Seiten zufolge der Herstellung durch einen Fingerfräser gerundet sind. Davon abgesehen könnte die Koppelöffnung 40 auch jeden anderen geeigneten Querschnitt aufweisen - auch verschiedene Querschnitte bzw. Größen der einzelnen Koppelöffnungen sind möglich, um das Koppelverhalten zu beeinflussen.

Im Bereich der Stirnfläche 24 ist in Fig. 3 strichliert ein bedarfsweise vorzusehender Boden für den Hohlleiter 27 angedeutet, der dann diesen Hohlleiter tatsächlich zu einem Rechteck-Hohlleiter macht. Davon abgesehen ist aber jede andere geeignete Art bzw. Querschnittsform des Hohlleiters 27 denkbar und im Ermessensbereich des Fachmannes bedarfsweise einsetzbar.

Im Bereich der Koppelöffnung 40 ist gemäß Fig. 3 ein Verschlußstück 31 aus elektrisch nichtleitendem Material mit geringen dielektrischen Verlusten angeordnet, welches den Innenraum des Hohlleiters 27 gegen den vom Geschoß überstrichenen Innenbereich hin abschließt und damit das Eindringen von Verschmutzungen bzw. allfällige negative Auswirkungen von verbleibenden Druckwellen unterbindet.

In Fig. 4 ist schematisch eine andere Ausführung eines Koppelelements 2′ dargestellt, dessen Hohlleiter-Übergang 7′ durch eine Vielzahl von schlitzförmigen Koppelöffnungen 40′ am Umfang des vom Geschoß überstrichenen inneren Bereichs 13′ gebildet ist. Der Hohlleiter 27′, der beispielsweise wiederum einen hier nicht dargestellten Koaxial-Hohlleiter-Übergang zum Anschluß eines Koaxialkabels aufweisen kann, ist im Bereich des Hohlleiter-Übergangs 7′ abgebogen und parallel zur Achse des inneren Bereichs 13′ verlaufend ausgeführt. Die schlitzförmigen Koppelöffnungen 40′ weisen auch hier wiederum einen von der Wellenlänge der ein- bzw. auszukoppelnden Welle abhängigen Abstand auf, womit wiederum die oben bereits beschriebenen Vorteile erzielbar sind.

Gemäß der schematisch in Fig. 5 dargestellten Anordnung wird zur statischen Kalibrierung eine über eine Schubstange 32 mit einer Wegmeßeinrichtung 33 zusammenwirkende Geschoßatrappe 34 zumindest bereichsweise durch das Waffenrohr 1 bewegt, welches im übrigen hier den Hohlleiter-Übergang 7″ nicht an einem separaten Koppelelement sondern unmittelbar an den seitlichen Koppelöffnung 40, 41 des Waffenrohres 1 angeordnet hat. Über die dem Koaxialkabel 11 in Fig. 1 entsprechende Leitung 36 erfolgt die Zu- bzw. Ableitung des Signals zum bzw. vom Hohlleiter-Übergang 7″. Ein der jeweiligen Position der Geschoßatrappe 34 im Waffenrohr 1 entsprechendes Wegsignal liegt über die Leitung 37 an der Einheit 38 an, welche hier sowohl die Auswerteeinheit als auch die Einheit zur Erzeugung der Mikrowellen umfaßt.

Die Geschoßatrappe 34 ist relativ leicht im Waffenrohr 1 hin und her bewegbar, wobei eine genaue Zuordnung zwischen dem wie zu Fig. 1 beschrieben erhaltenen Meßsignal und dem tatsächlichen Weg des Geschosses im Waffenrohr erhalten wird.

Abgesehen von der dargestellten und besprochenen Ausführung mit jeweils einem einzelnen Hohlleiter-Übergang ist im Rahmen der Erfindung natürlich auch die Anordnung eines weiteren bzw. sogar mehrerer derartiger Übergänge - die jeweils wie beschrieben zumindest zwei Koppelöffnungen aufweisen - am Waffenrohr möglich, wodurch sich auf einfache Weise elektromagnetische Wellen mit verschiedenen Frequenzen jeweils optimal in das Waffenrohr einkoppeln bzw. daraus auskoppeln lassen, sodaß beispielsweise für die unterschiedlichen Phasen der Geschoßbewegung im Waffenrohr unterschiedliche Genauigkeiten erzielt werden können.

## Patentansprüche

1. Verfahren zur zerstörungsfreien Bestimmung innenballistischer Kenngrößen in Rohrwaffen, wobei eine elektromagnetische Welle über einen seitlich am Waffenrohr angeordneten Hohlleiter-Übergang in das Waffenrohr eingekoppelt und nach Reflexion an einem in diesem befindlichen Geschoß wieder ausgekoppelt wird und wobei die sich bei einer Änderung der Geschoßposition im Waffenrohr ändernde Phasenlage zwischen eingekoppelter und ausgekoppelter Welle als Meßsignal verwendet wird, **dadurch gekennzeichnet,** daß zur Einkoppelung der elektromagnetischen Welle diese aufgeteilt und an zumindest zwei beabstandeten Stellen des Hohlleiterüberganges dem Waffenrohr zugeführt wird, sodaß sich die in Richtung zum Geschoß ausbreitenden Wellenteile addieren und die in die entgegengesetzte Richtung ausbreitenden Wellenteile kompensieren.

2. Verfahren nach Anspruch 1, dadurch gekennzeichnet, daß zur statischen Kalibrierung eine mit einer Wegmeßeinrichtung zusammenwirkende Geschoßattrappe zumindest bereichsweise durch das Waffenrohr bewegt und der Zusammenhang von aktuellem Ort der Geschoßattrappe und Phasendifferenz bzw. Dopplerfrequenz bestimmt wird.

3. Einrichtung zur Durchführung des Verfahrens nach Anspruch 1 an einem Waffenrohr mit einem darin befindlichen Geschoß, mit einer Einheit zur Erzeugung der einzukoppelnden Welle, einer damit in Verbindung stehenden und einen seitlich in der inneren Oberfläche eines vom Geschoß überstrichenen Bereiches am Waffenrohr angeordneten Hohlleiter-Übergang aufweisenden Koppeleinrichtung zum Ein-und Auskoppeln der Wellen und einer ebenfalls mit der Koppeleinrichtung in Verbindung stehenden Auswerteeinheit, **dadurch gekennzeichnet,** daß die Koppeleinrichtung zumindest zwei Koppelöffnungen (40,40',41) aufweist, die an beabstandeten Stellen (39) der inneren Oberfläche eines vom Geschoß (6) überstrichenen Bereiches am Waffenrohr (1) so angeordnet sind, daß sich die in Richtung zum Geschoß (6) ausbreitenden Wellenteile addieren und die in die entgegengesetzte Richtung ausbreitenden Wellenteile kompensieren.

4. Einrichtung nach Anspruch 3, dadurch gekennzeichnet, daß bei gleicher Ausbreitungsgeschwindigkeit der einzelnen Wellenteile und gleicher Phasenverschiebung an den einzelnen Koppelöffnungen (40,40',41) der in Längsrichtung des Waffenrohres (1) gemessene Abstand der einzelnen Koppelöffnungen (40,40',41) ein natürlichzahliges Vielfaches der verwendeten Wellenlänge vermehrt um ein Viertel der Wellenlänge beträgt.

5. Einrichtung nach Anspruch 3 oder 4, wobei die Koppeleinrichtung in einem separat an der Mündung des Waffenrohres aufsetzbaren und mit dieser verbindbaren Koppelelement vorgesehen ist, welches in dem vom Geschoß überstrichenen Einkoppel-Bereich eine zylindrische Durchgangsausnehmung mit einem gegenüber dem Waffenrohr vergrößerten Durchmesser aufweist, dadurch gekennzeichnet, daß zwischen der Durchgangsausnehmung (26) des Koppelelements (2) und dem Waffenrohr (1) ein einen konischen Übergang (15) zwischen den unterschiedlichen Durchmessern aufweisender, vorzugsweise austauschbarer, Adapterteil (23) angeordnet ist.

6. Einrichtung nach Anspruch 5, dadurch gekennzeichnet, daß der Adapterteil (23) im Bereich des konischen Überganges (15) nach außen offene Ausnehmungen (25) zum Druckabbau aufweist.

7. Einrichtung nach einem der Ansprüche 3 bis 6, dadurch gekennzeichnet, daß die Koppelöffnungen (40,40',41) im wesentlichen rechteckig sind und mit einem entsprechenden Rechteckhohlleiter (27, 27') in Verbindung stehen, der seinerseits, vorzugsweise mittels Koaxialkabel (11), mit der Einheit (8) zur Erzeugung der einzukoppelnden Welle sowie mit der Auswerteeinheit verbunden ist.

_Fig. 1_

_Fig. 2_

EP 0 331 670 A1

Fig. 3

Fig. 4

Fig. 5

# EUROPÄISCHER RECHERCHENBERICHT

**Europäisches Patentamt**

Nummer der Anmeldung

EP 89 89 0058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 023 365 (ARES) * Seite 1, Zeilen 1-5; Seite 9, Zeile 28 - Seite 10, Zeile 20; Seite 12, Zeilen 1-13; Seite 13, Zeilen 12-28; Seite 18, Zeilen 5-22: Seite 24, Zeilen 1-13; Seite 27, Zeilen 10-23; Figuren 2,3 * & US-A-4 283 989 (Kat. D) | 1,3,7 | G 01 P 3/66 |
| Y | DE-A-2 054 583 (SPORLEDER) * Seite 1, Zeile 1 - Seite 2, Zeile 7; Seite 2, Zeilen 13-16; Seite 3, Zeilen 3-11; Seite 7, Zeilen 5-10; Figuren 1,2 * | 1,3,7 | |
| A | | 4 | |
| A | FR-A- 976 704 (C.G.E.) * Seite 1, Spalte 1, Zeilen 10-16,25-31; Seite 2, Spalte 1, Zeile 37 - Spalte 2, letzter Zeile; Figur 1 * | 1,3 | |

**RECHERCHIERTE SACHGEBIETE (Int. Cl.4)**

G 01 P
H 01 P
F 41 G
G 01 S

Der vorliegende Recherchenbericht wurde für alle Patentansprüche erstellt

| Recherchenort | Abschlußdatum der Recherche | Prüfer |
|---|---|---|
| DEN HAAG | 09-06-1989 | ROBINSON M.A. |